# EUROPEAN PATENT APPLICATION

(11) **EP 2 541 517 A1**
(43) Date of publication of application: **02.01.2013**
(21) Application number: 11819275.6
(22) Date of filing: 04.01.2011
(51) Int. Cl.: G07F 19/00, G06Q 20/00, G06Q 30/00

(54) **POINT-OF-SALE (POS) MACHINE, POS MACHINE CARD-PAYMENT SYSTEM AND CARD-PAYMENT TRADING METHOD THEREOF**

(30) Priority: 24.08.2010 CN 201010262538
(71) Applicant: ZTE Corporation, Shenzhen, Guangdong 518057 (CN)
(72) Inventor: LI, Liangxi, Guangdong 518057 (CN)
(74) Representative: Novagraaf Technologies
(86) International application number: PCT/CN2011/070022
(87) International publication number: WO 2012/024900

(57) **Abstract**

A POS machine and a POS machine card-payment system and a card-payment transaction method thereof. The POS machine card-payment system can select merchant information by selecting a product or a merchant and download the merchant information in a database to a POS machine terminal, and thus enable the POS machine terminal to perform card-payment operation based on the downloaded merchant information, thereby achieving the function that a plurality of merchants share a POS machine terminal to perform card-payment operation, and the merchant information can be added, deleted and modified by the card-payment system, thereby achieving the purpose of freely expanding the number of merchants.

## Description

### Technical Field

The present invention relates to the POS machine card-payment technology field, and particularly , to a POS machine, a POS machine card-payment system and a card-payment transaction method thereof that can freely expand the number of merchants.

### Background of the Related Art

With the increasing popularization of bank cards, people began to frequently use bank cards to perform card-payment consumption. After consumption at a merchant, a consumer can perform consumption payment operation by swiping a card on a POS machine, without having to carry a large number of cashes to perform consumption payment operation as before. With the popularity of card-payment consumption, many merchants began to consider applying for a POS machine in order to enable consumers to perform POS machine card-payment consumption. However, a POS machine is much expensive, the arrangement cost of a POS machine is much high, and a merchant that has a small turnover is difficult to apply for a POS machine.

Fixed merchant accounts and numbers of banks to which the merchant accounts belong are written into traditional POS machines. If several small merchants apply for a common POS machine, the card-payment transactions performed on the common POS machine will all be transferred to a CUP (China Union Pay) account and will be divided among the small merchants. In this way, the accounts are not easy to be clearly divided and a variety of disputes are prone to occur.

The solution adopted in a POS card-payment system in the current market is that a large third party applies for POS machines and the income of card-payment transactions is divided by the third party. Current large-scale malls and supermarkets all belong to this case, and the money of all the transactions is firstly transferred to the third party account (usually a mall management party), and the third party settles accounts with each merchant monthly, but the payment for goods will be transferred to a merchant account until the end of a month. Meanwhile, the third party will charge in proportion to the amount.

Neither of the two above-mentioned methods can solve the problem that occurs as a plurality of merchants use the same POS terminal, and meanwhile there is also a problem that the number of merchants cannot be freely expanded due to the fixed merchant accounts.

### Content of the Invention

A technical problem to be solved by the present invention is to provide a POS machine, a POS machine card-payment system and a card-payment transaction method thereof so as to overcome the defect that the current POS machine terminals and card-payment systems thereof only allow fixed merchants to perform card-payment operation and cannot achieve the free expansion of the number of merchants.

In order to solve the above-mentioned problem, the present invention provides a POS machine card-payment system, comprising:
a database, configured to save merchant information, the merchant information comprising bank account information of a merchant;
a selection module, configured to select a merchant or a product and acquire the merchant information of the selected merchant or the merchant information of the merchant to which that the selected product belongs from the database;
a download module, configured to download the merchant information to a POS machine terminal; and
a POS machine terminal, configured to acquire bank account information of a customer and receive the merchant information, and encrypt and send the merchant information, the bank account information of the customer and transaction information to a bank card-payment transaction system to complete the transaction.

The POS machine card-payment system further comprises: a local encryption module, configured to encrypt the merchant information acquired by the selection module and attach digital signature information to the merchant information.

The POS machine terminal comprises:
an interface module, configured to connect the POS machine terminal with the download module and receive the merchant information corresponding to the selected merchant or product from the download module;
a customer information acquisition module, configured to acquire the bank account information of the customer;
an encryption and decryption module, configured to encrypt the merchant information, the bank account information of the customer and the transaction information sent to the bank card-payment transaction system; and
a card-payment logic controller, configured to allow card-payment transaction operation after acquiring the merchant information or else prompt that the operation fails.

The encryption and decryption module is further configured to decrypt the encrypted merchant information and verify a signature on receiving the encrypted merchant information.

The selection module is further configured to operate the database to add, modify or delete the merchant information in the database.

The present invention also provides a POS machine terminal, comprising:
an interface module, configured to receive merchant information corresponding to a merchant or a product selected by a POS machine card-payment system;
a customer information acquisition module, configured to acquire bank account information of a customer;
an encryption and decryption module, configured to encrypt the merchant information, the bank account information of the customer and transaction information sent to a bank card-payment transaction system; and
a card-payment logic controller, configured to allow card-payment transaction operation after acquiring the merchant information or else prompt that the operation fails.

The encryption and decryption module is further configured to decrypt the encrypted merchant information and verify a signature on receiving the encrypted merchant information.

The present invention further provides a POS machine card-payment transaction method, comprising:
selecting a product or a merchant by a POS machine card-payment system, acquiring corresponding merchant information from a database based on the selected product or merchant, the merchant information comprising bank account information of the merchant; downloading the acquired merchant information to a POS machine terminal;
the POS machine terminal receiving the merchant information and acquiring bank account information of a customer, encrypting and sending the merchant information, the bank account information of the customer and transaction information to a bank card-payment transaction system.

The method further comprises: adding, deleting or modifying the merchant information in the database as it needs to add or delete a merchant or modify the merchant information in the POS machine card-payment system.

The method further comprises: before selecting the product or the merchant by the POS machine card-payment system, the manner that the POS machine card-payment system acquires the merchant information of the selected merchant or product from the database comprising:
selecting the merchant directly by a mouse or a keyboard and acquiring the merchant information of the selected merchant from the database; or
selecting the product by the mouse or the keyboard, firstly acquiring the merchant corresponding to the selected product from the database, and then acquiring the merchant information corresponding to the selected product from the database; or
entering a merchant number directly by the keyboard, and acquiring the merchant information of the selected merchant from the database based on the merchant number.

Compared with the prior art, the POS machine card-payment system of the present invention introduces a database used to save product and/or merchant information, a selection module used to select a product or a merchant and a download module in order to dynamically download the merchant information in a transaction by the download system. As a merchant account and number information of the bank to which the merchant account belongs in a POS terminal can be modified according to the actual merchant of the transaction, this changes the present status that a traditional POS machine can only be associated with one merchant account and changes the POS machine from being private to a single merchant to being shared by a plurality of merchants. Any merchant can perform card-payment operation on the POS terminal to complete a transaction as long as the merchant has an account in a bank card-payment system.

The merchants completing transactions on the POS machines by using the POS machine card-payment transaction system of the present invention can be no longer limited and can be expanded freely. Particularly, it is suitable for commercial streets or commercial cities where small merchants relatively concentrate in and the merchants relatively frequently change. When a new merchant joins, it only needs to enter the Union Pay account information and the number of the bank to which the account belongs and other information of the merchant into the database of product and merchant information, and then the merchant can use this POS machine to perform card-payment transaction operation. When a merchant leaves, the merchant information can be simply deleted or suspended from the database. In addition, the present invention further provides a selection module for displaying products and merchants as a display platform of products and merchants, and the user can intuitively select the products and merchants and perform card-payment operation.

### Brief Description of Drawings

FIG. 1 illustrates the structure of a POS machine card-payment system of the present invention;
FIG. 2 illustrates the structure of a USB-POS machine terminal of the present invention;
FIG. 3 is a flowchart of a POS machine card-payment transaction of the present invention.

### Preferred Embodiments of the Present Invention

In order to make objects, technical solutions and advantages of the present invention clearer, and hereinafter, the present invention will be further described in detail in conjunction with the accompanying drawings.

The POS machine card-payment system of the present invention, by way of selecting a merchant, dynamically and securely downloads merchant information to a POS machine terminal according to the current merchant demanding a transaction, thus enabling a consumer of the merchant to transact with the merchant by performing card-payment operation directly. In this way, one POS machine can accomplish separated transactions for a plurality of merchants, and the merchants can be added, modified or deleted, which shows a good expansion.

Description will be made blow by taking a USB-POS machine terminal and a CUP transaction system and a CUP card in the domestic CUP system as an example.

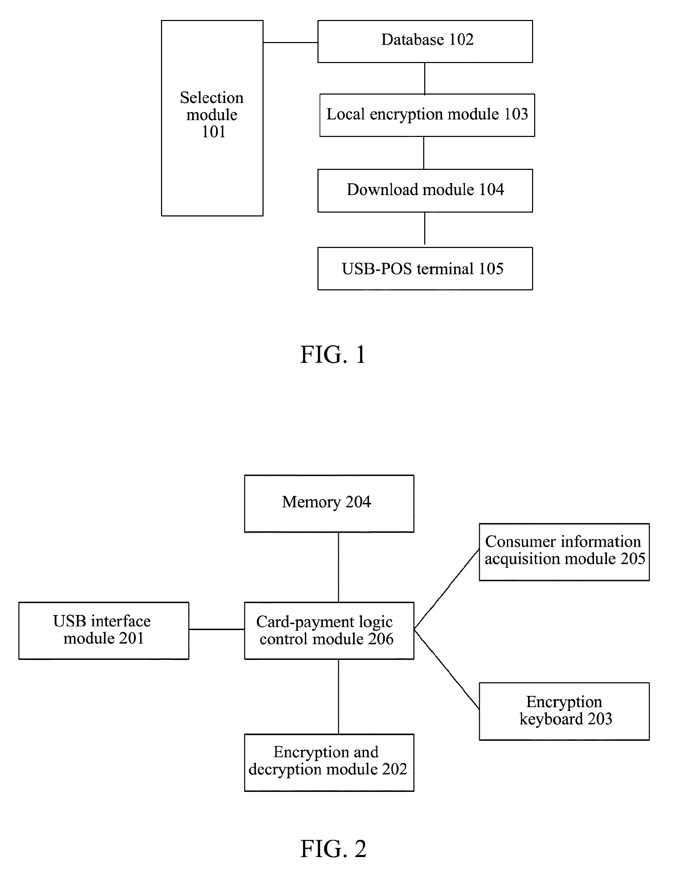

As shown in Figure 1, a POS machine card-payment system shared by a plurality of merchants in the present invention comprises the following modules.

A database 102, is used to store product information and merchant information as well as association information between the product and the merchant, wherein the product information comprises information of the merchant to which a product belongs, and the merchant information comprises the merchant's account information and may further comprise a merchant number, the number of the bank to which the merchant account belongs and other information, and since the account information usually implicitly includes the number of the bank to which the account belongs, the database may only save the account information and the corresponding bank number is read from the account information.

A selection module 101 is used to display information of a product and/or a merchant and enable an operator to select a product or a merchant, and may comprise a plurality of physical input devices, and the operator can use an input device including a mouse and a keyboard to select the displayed product or merchant; and the operator can also select the merchant by entering a merchant number to be automatically associated with the specified merchant.

After the operator selects a product using a mouse or a keyboard, the system automatically acquires the related information of the merchant corresponding to the selected product from the database, and then automatically acquires the account information of the merchant and number information of the bank to which the account belongs.

When the operator selects a merchant, the system automatically and directly acquires the merchant's account information and number information of the bank to which the account belongs from the database; after a user enters a merchant number, the selection module automatically acquires the account information of this merchant and the number information of the bank to which the account belongs from the database.

A local encryption module 103 is used to encrypt the merchant information needed to be downloaded to a POS machine terminal and attach a digital signature to the merchant information to ensure that the merchant information downloaded to the POS terminal is valid and has not been tampered, that is to ensure that unauthorized information and error information downloaded to the POS terminal will not be written into the POS terminal, and thus to ensure secure transaction.

A download module 104 comprises a download control portion and a USB interface portion and is responsible for downloading the merchant account, the number of the bank to which the merchant account belongs and other information to the POS terminal through the USB interface; and for other types of interfaces of POS terminals, this can be also accomplished using a corresponding interface.

A USB-POS terminal 105 is responsible for reading customer account information from a CUP card of a customer, the POS terminal is also responsible for uploading transaction information, the merchant information (including the account information of the merchant), the account information of the bank card of the customer to a CUP system and receiving a transaction result returned from the CUP system. when necessary, the customer can also enter a CUP card password through an encryption keyboard, and the password is encrypted and also sent to the CUP system. If the bank card is encrypted by using other encryption methods, such as fingerprint encryption, then a fingerprint reader can be used to acquire a fingerprint password.

As shown in Figure 2, the USB-POS terminal 105 mainly comprises the following parts.

A USB interface module 201 is an interface that connects the POS terminal and the product and merchant download module.

An encryption and decryption module 202 decrypts the downloaded merchant account information and number information of the bank to which the merchant account belongs and verifies the digital signature, and sends the verification result to a card-payment logic control module 206; and is further used to encrypt the merchant information, the bank account information of the customer, the password and the transaction information sent to the bank card-payment transaction system.

An encryption keyboard 203 is used to receive the bank card password entered by the consumer after swiping the card, and encrypt the bank card password entered by the customer to ensure that all the password transmissions are transferred in cipher text on the line after the consumer enters the password; and can be replaced with a corresponding device such as a fingerprint scanner or a pupil scanner to acquire fingerprint or pupil information to acquire a password according to a different input manner.

A memory 204 is used to save a variety of information demanded by POS card-payment transactions, and store the current merchant account information and the number information of the bank card of the merchant; and can be an erasable and writable storage device, typically using FLASH or EEPROM technology; and in another embodiment of the present invention, POS terminals can also have no memory modules, because a POS machine only allows one merchant account to exist for each card-payment operation, so the merchant information may not be saved but only needs to be temporarily saved at the time of card-payment operation, and can be cleared after completion of card-payment operation.

A consumer information acquisition module 205 is responsible for reading user CUP card track information; the module varies depending on the card held by the user, if the POS device is paid wirelessly by a mobile phone, then the module can be replaced with a radio frequency smart card, or if the POS device held by the user is a memory card, such as a bank card shield, then the recognition module can be replaced with a reader.

A card-payment logic control module 206 controls the card-payment transaction flow on the POS machine terminal, and if the local decryption module 202 successfully verifies the downloaded merchant information, then the module allows a transaction and prompts the user to perform card-payment operation; and if the local decryption module 202 fails to verify the downloaded merchant information, then the module directly prompts the failure or prompts the user to reselect a merchant or a product.

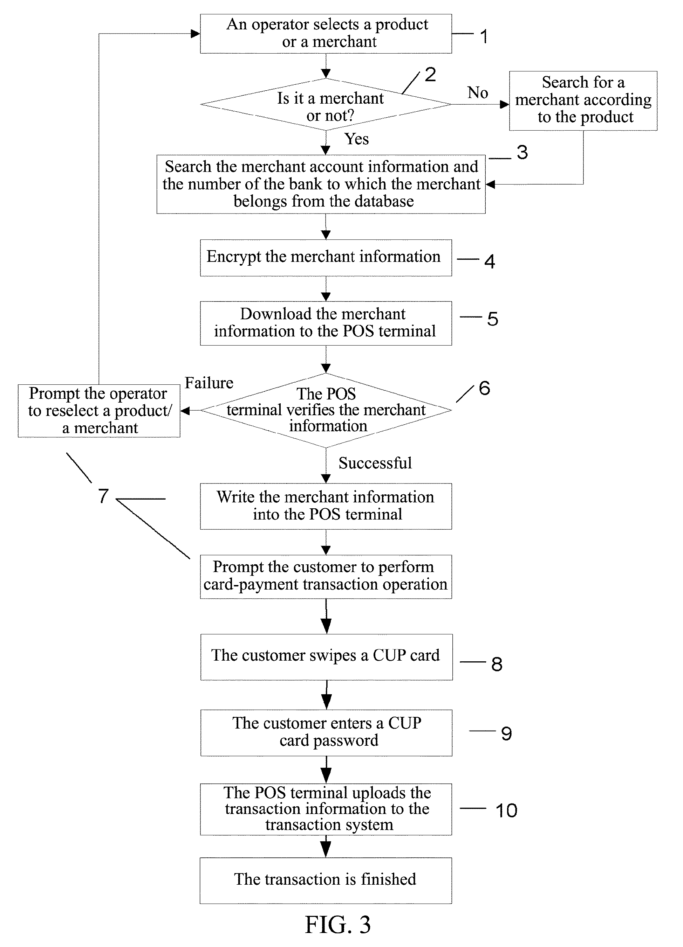

As shown in Figure 3, the flow for performing the card-payment transaction operation using the expandable common POS system of the present invention is as follows.

At step 1, an operator uses a physical input device such as a mouse or a keyboard to select a product or a merchant on the selection module, or uses a keyboard to directly enter a merchant number.

At step 2, the selection module judges whether the user selected a product or a merchant, if it is a product, then the database is searched to acquire the information of the merchant to which the product belongs, then the process proceeds to step 3; if the user selected a merchant or directly entered a merchant number, then the process proceeds to step 3.

At step 3, the selection module acquires the merchant's account information and bank card number information that the account belongs to from the database according to the merchant information.

At step 4, the local encryption module encrypts the merchant's account information, the bank card number that the account belongs to and other information and attaches digital signatures to them.

At step 5, the download module downloads the encrypted merchant information (mainly comprising the merchant account and the number of the bank to which the merchant account belongs) to the POS terminal through the USB interface.

At step 6, the encryption and decryption module at the USB-POS terminal decrypts the encrypted merchant information and verifies the digital signatures.

At step 7, if the merchant information verification fails, then the user will be prompted to reselect a product or a merchant, and if the digital signature verification is successful after decryption, then card-payment transaction operation is allowed and the merchant information can be written into the merchant information memory, and the consumer is prompted to perform card-payment operation.

At step 8, the consumer swipes a bank card on the POS machine.

At step 9, the consumer enters a bank card password by an encryption keypad.

At step 10, the consumer confirms the payment, and then the POS machine encrypts and uploads the transaction information, the merchant information and the account and the password information of the consumer to the bank card-payment transaction system to complete the transaction, and then displays a transaction result returned from the bank card-payment transaction system.

The above-mentioned contents are only the embodiments of the present invention and are not used to limit the present invention. It will be apparent to those skilled in the art that various changes and variations can be made in the present invention. Any modification, equivalent alternatives and improvement made within the spirit and principles of the present invention should be comprised within the scope of the claims of the present invention.

### Industrial Applicability

The merchants completing transactions on the POS machines by using the POS machine card-payment transaction system of the present invention can be no longer limited and can be expanded freely. Particularly, it is suitable for commercial streets or commercial cities where small merchants relatively concentrate in and the merchants relatively frequently change. When a new merchant joins, it only needs to enter the Union Pay account information and the number of the bank to which the account belongs and other information of the merchant into the database of product and merchant information, and then the merchant can use this POS machine to perform card-payment transaction operation. When a merchant leaves, the merchant information can be simply deleted or suspended from the database. In addition, the present invention further provides a selection module for displaying products and merchants as a display platform of products and merchants, and the user can intuitively select the products and merchants and perform card-payment operation.

## Claims

1. A POS machine card-payment system, comprising:
a database, configured to save merchant information, the merchant information comprising bank account information of a merchant;
a selection module, configured to select a merchant or a product and acquire the merchant information of the selected merchant or the merchant information of the merchant to which the selected product belongs from the database;
a download module, configured to download the merchant information to a POS machine terminal; and
a POS machine terminal, configured to acquire bank account information of a customer and receive the merchant information, and encrypt and send the merchant information, the bank account information of the customer and transaction information to a bank card-payment transaction system to complete the transaction.

2. The POS machine card-payment system of claim 1, wherein the POS machine card-payment system further comprises a local encryption module:
the local encryption module is configured to encrypt the merchant information acquired by the selection module and attach digital signature information to the merchant information acquired by the selection module.

3. The POS machine card-payment system of claim 1 or 2, wherein the POS machine terminal comprises:
an interface module, configured to connect the POS machine terminal with the download module and receive the merchant information corresponding to the product or the merchant which is selected from the download module;
a customer information acquisition module, configured to acquire the bank account information of the customer;
an encryption and decryption module, configured to encrypt the merchant information, the bank account information of the customer and the transaction information sent to the bank card-payment transaction system; and
a card-payment logic controller, configured to allow card-payment transaction operation after the merchant information is acquired, or else, prompt that the operation fails.

4. The POS machine card-payment system of claim 3, wherein,
the encryption and decryption module is further configured to decrypt the encrypted merchant information and verify a signature on receiving the encrypted merchant information.

5. The POS machine card-payment system of claim 1, wherein,
the selection module is further configured to operate the database to add, modify or delete the merchant information in the database.

6. A POS machine terminal, comprising:
an interface module, configured to receive merchant information corresponding to a merchant or a product selected by a POS machine card-payment system;
a customer information acquisition module, configured to acquire bank account information of a customer;
an encryption and decryption module, configured to encrypt the merchant information, the bank account information of the customer and transaction information sent to a bank card-payment transaction system; and
a card-payment logic controller, configured to allow card-payment transaction operation after the merchant information is acquired, or else prompt that the operation fails.

7. The POS machine terminal of claim 6, wherein,
the encryption and decryption module is further configured to decrypt the encrypted merchant information and verify a signature on receiving the encrypted merchant information.

8. A POS machine card-payment transaction method, comprising:
selecting a product or a merchant by a POS machine card-payment system, acquiring corresponding merchant information from a database based on the selected product or merchant, the merchant information comprising bank account information of the merchant; downloading the acquired merchant information to a POS machine terminal; and
the POS machine terminal receiving the merchant information and acquiring bank account information of a customer, encrypting and sending the merchant information, bank account information of a customer and transaction information to a bank card-payment transaction system.

9. The POS machine card-payment transaction method of claim 8, the method further comprises:
adding, deleting or modifying the merchant information in the database as it needs to add or delete a merchant or modify the merchant information in the POS machine card-payment system.

10. The POS machine card-payment transaction method of claim 8, the method further comprises:
before selecting the product or the merchant by the POS machine card-payment system, the manner that the POS machine card-payment system acquires the merchant information of the selected merchant or product from the database comprising:
selecting the merchant directly by a mouse or a keyboard and acquiring the merchant information of the selected merchant from the database; or
selecting the product by the mouse or the keyboard, firstly acquiring the merchant corresponding to the selected product from the database, and secondly acquiring the merchant information corresponding to the selected product from the database; or
entering a merchant number directly by the keyboard, and acquiring the merchant information of the selected merchant from the database based on the merchant number.
